# EUROPÄISCHE PATENTSCHRIFT

(11) **EP 4 438 419 B1**
(45) Veröffentlichungstag und Bekanntmachung des Hinweises auf die Patenterteilung: **11.02.2026**
(21) Anmeldenummer: 24194386.9
(22) Anmeldetag: 21.03.2019
(51) Int. Cl.: B60T 13/66, B60T 8/40, B60T 7/04

(54) **PACKAGING FÜR EIN BREMSSYSTEM**
PACKAGING FOR A BRAKE SYSTEM
BOÎTIER POUR UN SYSTÈME DE FREINAGE

(30) Priorität: 12.02.2019 DE 202019101586 U
(43) Veröffentlichungstag der Anmeldung: 02.10.2024
(62) Teilanmeldung aus: 19714344.9
(73) Patentinhaber: IPGATE AG, 8808 Pfäffikon SZ (CH)
(72) Erfinder: LEIBER, Thomas, 22203 Rogoznica (HR); LEIBER, Heinz, 71739 Oberriexingen (DE)
(74) Vertreter: Peterreins Schley

(56) Entgegenhaltungen:
- EP-A1- 2 881 292
- EP-A1- 2 883 766
- EP-A1- 3 225 480
- EP-A1- 3 225 481
- DE-A1- 102012 213 216
- DE-A1- 102015 104 246
- DE-T5- 112013 004 634
- DE-T5- 112015 002 162

## Beschreibung

Die vorliegende Erfindung betrifft ein Betätigungssystem mit den Merkmalen des Oberbegriffs des Anspruch 1.

### Stand der Technik

Das Packaging oder Bauvolumen von Bremssystemen ist von großer Bedeutung. Insbesondere bei Systemen mit HAD (halbautomatisiertem) und FAD (vollautomatisiertem Fahren) sind viele Varianten von Level 2 mit Tandemhauptzylinder (THZ) oder Single-Hauptzylinder (HZ) bis Level 5 ohne THZ oder HZ zu berücksichtigen. Insbesondere sind 3 - 5 Konzepte mit 2 Druckversorgungen bzw. Druckversorgungseinrichtungen (DV) im Packaging schwierig mit kleinem Bauvolumen zu realisieren. Beispiele für Packaging sind aus EP 2744691 mit senkrechter Anordnung der Druckversorgung (DV) zur HZ-Achse und DE 20160321161604 mit paralleler Anordnung der Druckversorgungseinrichtung zur HZ-Achse bekannt, welche eine geringere Baubreite erfordern. Redundante Druckversorgungen ermöglichen Systeme mit nur einem Hauptbremszylinder, da die Ausfallwahrscheinlichkeit von zwei Druckversorgungseinrichtungen sehr gering ist und sich praktisch auf den Ausfall des Bordnetzes beschränkt. Ein solches System ist in DE 102017222450 beschrieben. Der Hauptbremszylinder HZ ermöglicht hier noch ein Notfahren mit Bremse z.B. zum Abschleppfahrzeug.

Aus DE102016105232 A1 ist ein Packaging mit kleinem Bauvolumen vorbekannt, bei dem eine integrierte redundante Druckversorgung bestehend aus mindestens einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, und einem Hauptbremszylinder in einem Modul zusammengefasst ist.

### Aufgabe der Erfindung

Aufgabe der vorliegenden Erfindung ist es, ein modulares Packaging für verschiedene Systeme mit kleinem Bauvolumen bereitzustellen.

### Vorteile der Erfindung

Diese Aufgabe wird mit einem System mit den Merkmalen des Anspruchs 1 gelöst. Vorteilhafte Ausgestaltungen des Systems nach Anspruch 1 ergeben sich durch die Merkmale der Unteransprüche.

Es wird ein Packaging mit kleinem Bauvolumen vorgeschlagen mit integrierter redundanter Druckversorgung DV bestehend aus mindestens einer Druckversorgungseinrichtung, mit Ventilen, insbesondere Magnetventilen zusammengefasst in einer Hydraulikunit, mit mindestens einer elektronischen Steuer- und Regeleinheit, mindestens einem Vorratsbehälter, mit einem Single-Hauptbremszylinder und Pedalhubsensoren und Wegsimulator mit Kolben. Dabei sieht die Erfindung verschiedene Varianten modular aufgebauter Betätigungssysteme für Bremssysteme vor, welche möglichst viele Gleichteile für Fertigung und Montage enthalten.

Mögliche erfindungsgemäße Varianten sind vorzugsweise:
Variante a:
   Eine 2-Box Lösung mit zwei Modulen ist, wobei das erste Modul die Druckversorgungseinrichtung (DV1), Hauptbremszylinder (HZ) mit Wegsimulator (WS), Ventilanordnung (HCU), Steuer- und Regeleinheit (ECU) und Vorratsbehälter (VB) umfasst und das zweite Modul ESP oder ABS beinhaltet.
Variante b:
   Eine 1-Box Lösung mit nur einem Modul ist, welches mindestens eine Druckversorgungseinrichtung (DV1, DV2), Ventilanordnung (HCU), Steuer- und Regeleinheit (ECU) und Vorratsbehälter (VB) umfasst,
Variante c:
   Eine 1-Box Lösung mit nur einem Modul ist, welches die Druckversorgungseinrichtung aufweist, wobei mindestens eine Druckversorgungseinrichtung redundant, d.h. z.B. mit einem doppelten Bordnetzanschluss oder redundanten Phasenwicklungen ausgebildet ist und bei der die Ventilanordnung (HCU), Steuer- und Regeleinheit (ECU) und Vorratsbehälter (VB) ebenfalls im Modul enthalten sind.
Variante d:
   Gleiches Modul wie bei Variante c. jedoch mit einer Steuer- und Regeleinheit welche voll oder teilredundanter ausgebildet ist.
Variante e:
   Eine 2-Box Lösung mit zwei Modulen ist, wobei das erste Modul eine Druckversorgungseinrichtung (DV1, DV2), Ventilanordnung (HCU), Steuer- und Regeleinheit (ECU) und Vorratsbehälter (VB) umfasst, wobei die Steuer- und Regeleinheit (ECU) voll oder teilredundanter ausgebildet ist, und das zweite Modul entweder den Hauptbremszylinder (HZ) mit optionalem Wegsimulator (WS).
Variante f:
   Erstes Modul wie bei Variante e, wobei im zweiten Modul anstatt eines Hauptbremszylinders ein elektronisches Bremspedal mit Wegsimulator WS oder nur ein Bremsschalter für Level 5 angeordnet ist bzw. sind.

Hierbei werden vorteilhaft die nachfolgend beschriebenen Gehäuse verwendet. Diese Gehäuse bilden Baugruppen, die zusammengebaut das gesamte Aggregat zum Einbau in das Fahrzeug bilden:
Gehäuse A: Umfasst die Ventilanordnung (HCU) für DV1 und DV2 mit z.B. Ventilen (V), Magnetventilen (MV) und einem oder mehreren Druckgebern (DG).
Gehäuse B: Umfasst die Steuer- und Regeleinheit ECU ohne Redundanz mit einem Hauptstecker oder mit Teil- oder Vollredundanz mit zwei Steckern zum Bordnetz.
Gehäuse C: Für HZ mit Pedalhubsensoren und kleinem Sensor-ECU und Vorratsbehälter VB für die Variante e. Der HZ beinhaltet auch das Pedalinterface (PI) zum Bremspedal und auch Wegsimulator mit Kolben und Feder.

Das Gehäuse A (HCU) wird vorzugsweise aus fließgepresstem Formstück gefertigt, das sich sehr gut eignet zur Befestigung und Montage mit Verstemmtechnik. Hier soll die DV1 mit Kolbenantrieb und KGT zum Motor integriert werden und ebenso DV2 mit kleinbauender Kolbenpumpe von ABS/ESP, außerdem die Ventile und Magnetventile. Hierbei ist DV1 z.B. parallel zur HZ-Achse angeordnet und die Kolbenpumpe DV2 senkrecht zur DV1. Außer der DV1 entspricht DV2 der bewährten Technik von ABS/ESP, ist also kostengünstig mit kleinem Bauvolumen. Alternativ kann auch eine Zahnrad- oder Flügelzellenpumpe mit kontinuierlicher Förderung verwendet werden. Auch ist das Interface zur Steuer- und Regeleinheit ECU ähnlich zu ABS/ESP. Der Hauptbremszylinder HZ mit allen vorgenannten Komponenten (Gehäuse C) kann an Gehäuse A angeschraubt werden - dies gilt für alle Varianten außer für die Varianten e und f. Hier wird das Gehäuse C als Baugruppe separat vom Aggregat an die Stirnwand montiert und die Hydraulikleitung vom Hauptbremszylinder HZ an das Gehäuse A angeschlossen. Bei den Varianten a. und d. sitzt der Vorratsbehälter VB im Gehäuse A mit zwei Anschlüssen an die Bremskreise oder mit zusätzlichem Anschluss zur Druckversorgung DV. Der Schwimmer im Vorratsbehälter VB enthält ein Target mit Verbindung zum Sensorelement in der Steuer- und Regeleinheit ECU. Der Motor kann vorzugsweise über ein Zwischengehäuse, welches vorzugsweise aus Kunststoff ist, mit dem Gehäuse A verbunden werden. Der für die Kommutierung des Motors und Kolbenposition notwendige Sensor kann vorzugsweise in der Motorachse auf der zum Kolben gegenüberliegenden Seite am Motorgehäuse angebracht und mit der Steuer- und Regeleinheit ECU verbunden werden. Hierbei sitzt der Sensor in einem Zusatzgehäuse zur ECU. Als Redundanz zum elektrischen Anschluss der Magnetspule des Magnetventils kann zur Hauptleiterplatte PCB eine kleine zusätzliche Leiterplatte eingesetzt werden, für einen zweiten Anschluss der Magnetspule. Das Gehäuse A kann auch aufgeteilt werden in ein Gehäuse A1 für die Druckversorgung DV2 mit klein bauender Pumpe und mit dem Ventil MV, sowie Druckgebern DG u.a. Komponenten und ein Gehäuse A2 für die Druckversorgung DV1 mit Motor und Gehäuse und Kolben mit Kugelgewindetrieb KGT und Ventilen mit Anschluss zum Vorratsbehälter VB.

Das dargestellte Packaging erfüllt die Anforderungen für Modularität und kleinem Bauvolumen und ist auch sehr günstig in Kosten und Gewicht.

Durch das Vorsehen eines speziellen Sensorgehäuses ist es möglich, die fertigungsbedingten Toleranzen der Gehäuse der erfindungsgemäßen Einheit einfach auszugleichen, so dass der Motorsensor sicher an der für ihn vorgesehen Position platziert werden kann.

Zudem kann durch eine spezielle Ausgestaltung des Vorratsbehälters dessen Einfüllstutzen bzw. -öffnung vorteilhaft an oder vor der Vorderseite des Gehäuses der elektronischen Steuereinheit bzw. der Betätigungsvorrichtung angeordnet werden, so dass sie gut erreichbar ist. Durch die seitlich am Gehäuse der elektronischen Steuereinheit vorbeiführende Verbindung des vorderen Einfüllstutzens hin zur Rückseite des Gehäuses des Steuereinheit kann der eigentlich Vorratsbehälter sinnvollerweise hinter der Steuereinheit angeordnet werden. Der seitliche bzw. mittlere Bereich des Vorratsbehälters kann vorteilhaft schmal ausgebildet werden, so dass die Betätigungsvorrichtung hierdurch nicht oder nur unwesentlich breiter baut als bei einem herkömmlichen Vorratsbehälter.

Nachfolgend werden verschiedene Varianten anhand von Zeichnungen näher erläutert.

Es zeigen:
- Fig. 1:: Seitenansicht einer erfindungsgemäßen integrierten Einheit mit den Gehäusen A, B, C und Vorratsbehälter VB und Pedalinterface (PI);
- Fig. 2:: die Ansicht von vorn V mit Schnitt durch HCU und ECU;
- Fig. 3:: Schnitt durch den Hauptbremszylinder HZ, Wegsimulator WS und PI;
- Fig. 4:: Darstellung der Pedalhubsensoren;
- Fig. 5:: zeigt das System ohne Hauptzylinder jedoch mit sogenanntem E-Pedal in getrennter Bauweise;
- Fig. 6:: eine Querschnittsdarstellung durch das Motorgehäuse, der elektronischen Steuereinheit sowie des Sensorgehäuses;
- Fig. 7:: platzsparende schematische Ausgestaltung eines Vorratsbehälters;
- Fig. 7a:: Vorratsbehälter gemäß Figur 7 mit schematisch dargestelltem Gehäuse der elektronischen Steuereinheit sowie dem Gehäuse für die Ventilanordnung;
- Fig. 8:: erfindungsgemäße Einheit gemäß Figur 1 mit dem Vorratsbehälter gemäß Figur 7;
- Fig. 9:: Ansicht der Einheit gemäß Figur 8 von vorne.

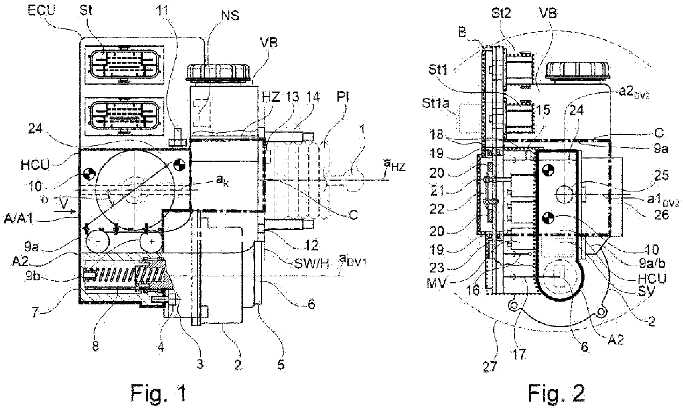

Fig. 1 zeigt die Seitenansicht der integrierten Einheit Gehäuse A mit Ventilanordnung HCU, welcher die Komponenten MV, Druckgeber DG, Kolben für DV1 und DV2 und Befestigung der Motoren von DV1 und DV2 enthält. Alternativ kann das Gehäuse, wie schon beschrieben, auch in die Gehäuse A1 und A2 aufgeteilt werden. Die Komponenten wie z.B. Ventile, Magnetventil MV, Druckgeber DG sind vorzugsweise an einem Fließ- oder Strang gepressten Block 24 befestigt, z.B. die MV vorzugsweise durch Verstemmen oder Clinchen, was auch dessen Abdichtung beinhaltet. Bei der Alternative wird wie oben genannt Gehäuse A1 den Teilblock 24 beinhalten. Gehäuse A2 kann z.B. ein Druckgussteil sein, ohne zu verstemmende Komponenten. Im unteren Teil ist der Kolben 8 der Druckversorgungseinheit DV1 mit Rückstellfeder und Gehäusedeckel 7 gezeigt, der z.B. vorzugsweise von nicht dargestellter Spindel und Kugelgewindetrieb KGT über den Motor 2 angetrieben wird. Dieser ist bei Gehäuse A über ein Zwischengehäuse 3 mit Befestigungsschrauben am HCU Block 24 angeschraubt. Bei Gehäuse A2 ist der Motor ohne Zwischengehäuse angebracht. Der Vorratsbehälter VB ist mit zwei Anschlüssen 9a und 9b mit den Bremskreisen 1 und 2 verbunden. In Verlängerung von 9c ist im Gehäuse das Saugventil SV für die Druckversorgung DV platziert.

Auf der gegenüberliegenden Seite ist das Sensorgehäuse 3 mit Drehwinkelsensor sowohl mit Motor 2 als auch ECU 18 über eine nicht dargestellte vorzugsweise flexible Leiterplatte mit dem Zwischengehäuse verbunden. Auf der Oberseite der Steuer- und Regeleinheit ECU sind die Stecker angebracht, die bei der redundanten ECU 2-fach ausgeführt sind. Bei der Variante mit separatem Hauptbremszylinder HZ ist mit 11 die entsprechende Verbindungsleitung zum Hauptbremszylinder HZ vorgesehen. Der Vorratsbehälter VB kann wie üblich einen Niveausensor (NS) mit Schwimmer beinhalten, wobei das Target mit Sensorelement in der Steuer- und Regeleinheit ECU angeordnet sind, welche vorzugsweise bei Level 4 und 5 redundant ausgeführt ist. Hinter dem Ventilanordnungsblock HCU ist in der vollintegrierten Version der Hauptbremszylinder HZ angeordnet, der mit Befestigungsschrauben 13 am HCU-Block 24 angeschraubt ist.

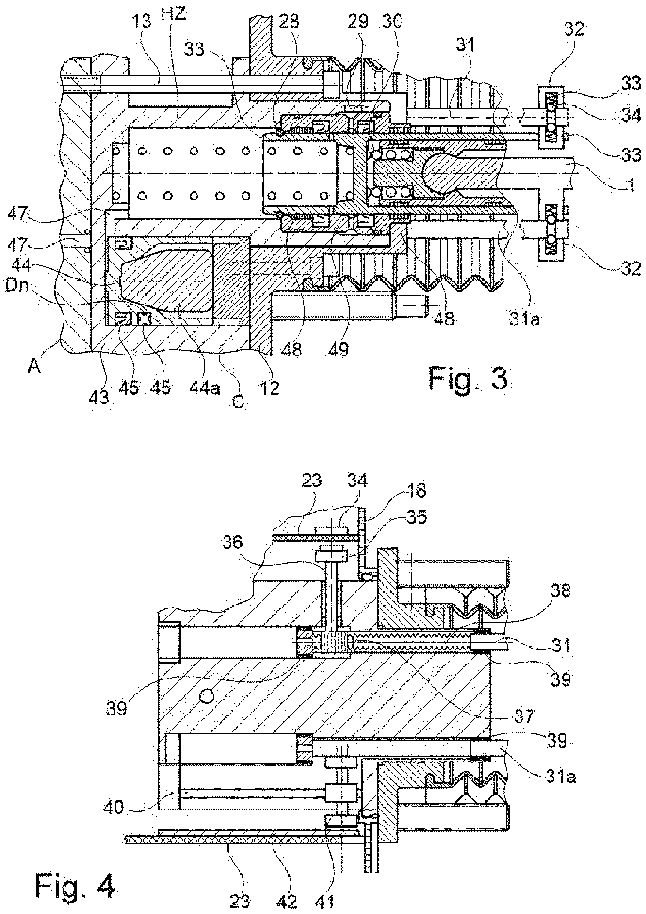

Figur 4 zeigt hier mehr Details. Am Hauptbremszylinder HZ befindet sich üblicherweise ein Flansch 12 zur Befestigung mit entsprechenden Schrauben 14 an der gestrichelt gezeichneten Stirnwand. In der Variante ohne Hauptbremszylinder HZ kann ein vereinfachter Flansch auch für die Befestigung im Aggregate- oder Motorraum eingesetzt werden. Hierbei sollte die Einheit wie an der Stirnwand für gute Entlüftung mit ca. 15 ° geneigt sein. Mit dem Hauptbremszylinder HZ sind Pedalinterface PI und Pedalstößel 1 verbunden. Die Anschlüsse der Ventilanordnung HCU zu den Radbremsen RB kann auf der Motorseite oder auf der Stirnseite erfolgen.

Die Achse der Druckversorgungseinrichtung DV1 liegt hierbei parallel zur HZ-Achse oder annähernd senkrecht zum Flansch und die DV2-Achse senkrecht zur Achse der Druckversorgungseinrichtung DV1. Die Achse a_{DV2} des Kolbens der Druckversorgungseinrichtung DV2 kann sowohl parallel zur Achse aDV1 der Druckversorgungseinrichtung DV1 als auch im Winkel α verdreht sein, was die Baulänge vorteilhaft verkürzt. Als weitere Alternative zur beschriebenen Anordnung von DV2 kann eine Anordnung von α_{DV2} parallel zur Hochachse eingesetzt werden. Hierbei muss für den unteren Stecker ein anderer Einbauort z.B. auf der gegenüberliegenden Seite der Steuer- und Regeleinheit ECU vorgesehen werden.

Fig. 2 zeigt die Ansicht von vorn. Hier wird gezeigt, dass die Umrißkontur noch innerhalb des kleinen Vakuum Vak. von 8" untergebracht werden kann und somit für den Einbau an der Spritzwand geeignet ist. Der große Vorteil liegt in der Baubreite von ca. 50 % von o.g. BKV, was für Rechts- und Linkslenker sehr günstig ist. Auch die Baulänge zu o.g. BKV ist erheblich kürzer, und bildet somit eine Basis für eine breite Anwendung des erfindungsgemäßen Modularkonzeptes. Hier sind auch wieder die verschiedenen Gehäuse A (A1, A2), B, C und VB vorzusehen. Gehäuse B liegt z.B. hinter dem HCU-Block 24 und wird mit diesem verschraubt und abgedichtet, wie bei ABS.

Der DV2-Motor wirkt mit z.B. Exzenter auf die Kolbenpumpe wie bei ABS/ESP. Bekanntlich ist der Bauraum hierfür sehr klein. Alternativ kann der Motor auch eine kurzbauende Zahnradpumpe antreiben. Auf der linken Seite ist die ECU mit Gehäuse 18 angeordnet mit Haupt-Leiterplatte PCB 23, die mit dem obenliegenden Stecker St verbunden ist.

Die MV-Spulen sind über Anschlussstege 21 wie üblich mit Einpresskontakten mit der Leiterplatte PCB 23 verbunden. Die Verbindung der Anschlussstege 21 zum Spulendraht gilt durch automatische Fertigung mit Prozesskontrolle als ausfallsicher, nicht unbedingt der Kontakt zur PCB. Die MV haben wichtige Funktionen und sind für insbesondere Level 4 und 5 mit redundanter Ansteuerung der Treiber 20/20r auszugestalten, wobei die Treiber noch einen Trennschalter besitzen. Die Kontaktierung zur Leiterplatte PCB kann ebenso redundant gestaltet werden durch einen zweiten Kontakt am Anschlusssteg 21, der mit einer kleinen Leiterplatte PCB 22 mit dem zweiten Treiber verbunden ist.

Vorteilhaft ist aus Kostengründen eine 1-teilige Leiterplatte PCB vorzusehen. Für den Fall des Eindringens von Wasser können die Leiterplatten PCB durch Stege mit Dichtung im Gehäuse der Steuer- und Regel ECU mit den beiden redundanten Schaltungen getrennt werden. Auch mögliche Leiterbahnrisse sind vorteilhaft durch Redundanzen abgedeckt bzw. ausgeschlossen. Wichtig sind auch die restlichen elektronischen Verbindungen von Motor 26 zu Leiterplatte PCB 23 mit elektrischer Verbindung 15, von Motor 2 mit der elektrischen Verbindung 16 des DV1 Motors und die mit dem Drehwinkelsensors 6. Der Vorteil der parallelen Anordnung von DV1 ist die kurze Länge der elektrischen Verbindung.

Fig 3 zeigt den Hauptbremszylinder HZ mit Gehäuse, in dem der HZ-Kolben 33 und WS-Kolben mit Feder für die Gegenkraft und Pedalcharakteristik eingebaut ist. Der Wegsimulatorkolben kann auch im Block A bzw. Gehäuse A untergebracht werden. Der Kolben besitzt ebenfalls redundante Dichtungen 45 mit Drossel Dr zum Innenraum. Bei Ausfall der Dichtung 45 wird über den Leckfluß der Ausfall erkannt und der Ausfall ist nicht relevant. Diese Drossel Dr mit kleinem Leckfluß erlaubt die Diagnose des Ausfalls der ersten Dichtung. Der Wegsimulator-Kolben stützt sich am Flansch 12 ab und benötigt deshalb kein getrenntes Verschlussstück. Parallel zum Wegsimulator-Kolben ist der HZ-Kolben 23 mit Rückstellfeder 50 angeordnet. Die Führung des Kolbens kann in Gleitringen 48 mit geringer Reibung erfolgen, auch wird hierbei die Dichtwirkung des Kolbens weniger beeinträchtigt. Vorzugsweise wird für die Gleitringe und Dichtungen ein getrenntes Lagerteil 49 verwendet, welches sich am Flansch abstützt und auch der Anschlag des Kolbens 23 mittels Anschlagring 28. Zur Diagnose des Wegsimulators WS kann im HZ-Kolben ein Kraft-Weg-Sensor KWS 30 angeordnet werden. Mit dem Kolben 23 und dem Pedalstößel sind die Sensorstangen 31 und 31a verbunden. Diese Stangen sind mit einer Rastkupplung 32-34 verbunden, jeweils mit Kolben und Pedalstößel. Diese Kupplung besteht aus Kugel 34 mit Feder 33 im Gehäuse 22. Damit wird eine Blockierung des Pedalstößels beim Klemmen einer Sensorstange vermieden.

Fig. 4 zeigt die Anordnung von zwei alternativen Ausführungsmöglichkeiten der Pedalwegsensoren. Die erste Variante mit Zahnstange 38, Zahnrad 37, Antriebswelle 36 zum Target 35 und Sensorelement 34 auf PCB 23 wurde bereits in DE102015104246 beschrieben. Diese Version benötigt wenig Einbauraum und ist kostengünstig. Bei der unteren Variante ist ein Führungsteil 39 z.B. mit Zapfen in die Sensorstange eingepresst. Dieses wird im oberen Teil in einer Führungsleiste 40 geführt, damit eine Winkelverdrehung klein ist, was sich auf das Target 41 auswirkt. Dieses Target wirkt auf einen induktiven Sensor 42 mit Auswerteschaltung und ist mit der Haupt-PCB 23 verbunden und sitzt im ECU-Gehäuse 14.

Für die oben beschriebenen Varianten a bis f können folgende Komponenten vorteilhaft gleich ausgebildet sein:
- DV1:: für alle Varianten a bis f;
- DV2:: für alle Varianten mit redundanter Druckversorgung;
- HCU/ECU:: für die zwei Varianten ohne redundante Druckversorgung;
- HZ und WS:: separat und integriert mit Pedalsensoren für fünf der sechs Varianten, mit Ausnahme von Variante f. ohne Hauptbremszylinder. Separater HZ jedoch mit zusätzlichem VB.
- MV:: für alle Varianten
- Motorsensor:: für alle Varianten.

Bis auf das E-Pedal entsprechend System f. sind alle Komponenten modular. Damit hat der Hersteller und Anwender einen modularen Systembaukasten (OEM) eine hervorragende Basis, auch für Kostenminimierung.

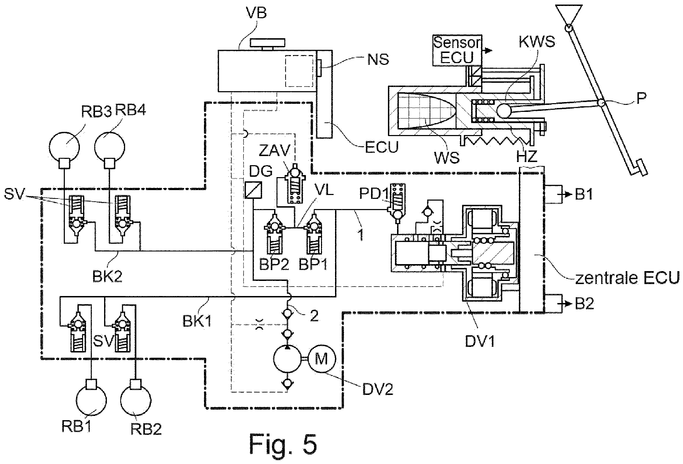

Fig. 5 zeigt die Druckversorgungseinrichtungen DV1 und DV2 mit Ventilanordnung. Hierbei ist ein elektr. Bremspedal, ein sog. E-Pedal, mit WS-Pedalwegsensoren mit kleiner Sensor-ECU und KWS ohne hydraulisch wirkenden Hauptbremszylinder HZ in einem Aggregat zusammengefasst sind. Dies hat Vorteile, wenn das Einbauvolumen im Aggregateraum klein ist oder die Geräuschanforderungen hoch. Anstelle des HZ mit VB (nicht ausgeführt in Fig. 5) kann auch die Anordnung mit Pedalbetätigung mit WS sog. E-Pedal eingesetzt werden. Die Signale der Pedalwegsensoren werden in einer Sensor-ECU aufgearbeitet und der zentralen ECU zugeführt. Auch kann für Level 5 alternativ zum E-Pedal ein Bremsschalter eingesetzt werden.

Das o.g. Aggregat besitzt den 2-Kreis-VB mit Schwimmer und Niveausensor NS, der in der zentralen Steuer- und Regeleinheit ECU integriert sein kann. Dieser Niveausensor NS soll ebenfalls redundant ausgebildet sein und stetig das Niveau messen, da hierüber ein Volumenverlust durch Leck schnell erfasst wird. Da hier die Verbindung zum Hauptbremszylinder HZ fehlt und damit auch die Rückfallebene zum Hauptbremszylinder HZ bei dem Ausfall beider Druckversorgungseinrichtungen DV1 und DV2 und/oder des Bordnetzes, sind die Ventile BP1 und BP2 vorzugsweise als stromlos geschlossene Ventile ausgeführt.

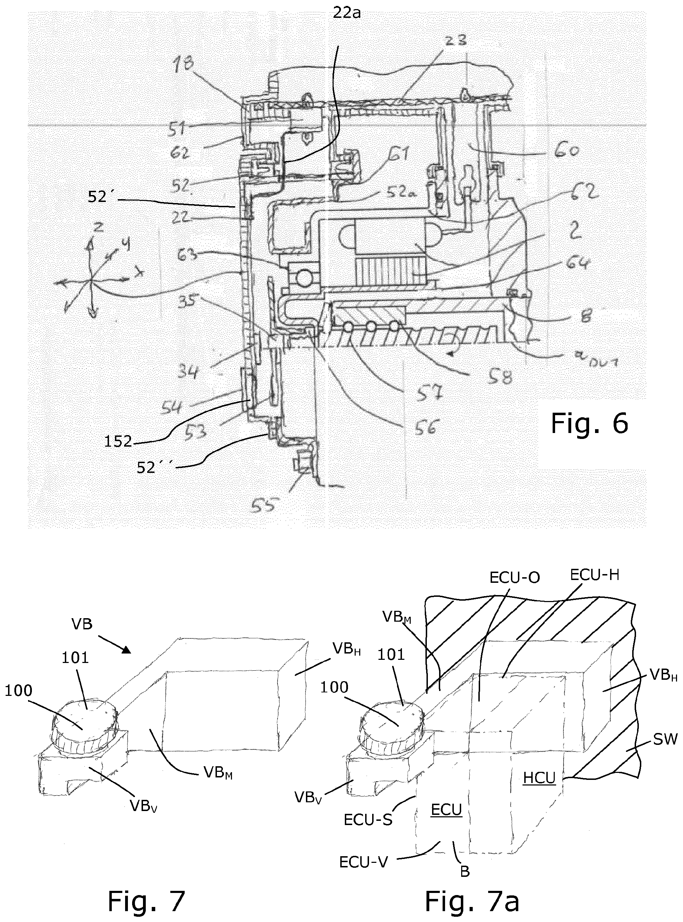

Eine wichtige Komponente eines elektrischen Motorantriebes ist der Motorsensor 34 für die elektronische Kommutierung und Steuerung der Position des Kolbens. Der Motor kann mit verschiedenen Antriebsarten, z.B. Getriebe, Trapez oder Spindel 57 mit Kugelgewindetrieb 58, wie in Fig. 6 gezeigt, kombiniert werden.

So können verschiedene Sensortypen, wie z.B. Segmentsensoren mit induktiven oder auch magnetfeldempfindlichen Sensoren, zum Einsatz kommen oder aber Sensoren, welche in der Motor- oder Getriebeachse angeordnet sind. Diese Sensoren sind besonders einfach im Aufbau, und setzen sich aus einem Sensortarget, z.B. in Form eines zwei- oder mehrpoliger Magneten, und einem magnetfeldempfindlichen Sensorelement, z.B. in Form eines Hallsensors, GMR-Sensors, o.ä. zusammen. Dieses Sensorelement 34 ist elektrisch mit der elektronischen Steuereinheit ECU verbunden, welche entweder unmittelbar oder über ein Zwischengehäuse an den Motor angebaut ist. Das Sensorelement 34 ist vorzugsweise in einem Sensorgehäuse bestehend aus einem äußeren Gehäuseteil 52 und einem inneren Gehäuseteil 52a angeordnet, welche zusammen u.a. eine Leiterplatte 22 aufnehmen, auf der das Sensorelement 34 angeordnet sein kann.

Um die verschiedenen Einbautoleranzen zwischen Gehäuse 18 der elektronischen Steuereinheit ECU, dem Motorgehäuse 62 und gegebenenfalls noch eines nicht dargestellten Zwischengehäuse und dem Sensorgehäuse 52/52a zu beherrschen, ist erfindungsgemäß ein elastisches Teil 61. Im Extremfall müssen dabei Toleranzen in allen drei Richtungen x, y, z ausgeglichen werden. Dies wird erfindungsgemäß durch einen entsprechenden Aufbau und Befestigung des Sensorgehäuses an dem Gehäuse 18 der elektronischen Steuereinheit ECU und an dem Motorgehäuse gelöst. Dabei ist das Sensorgehäuse vorteilhaft zweiteilig in ein äußeres Gehäuse 52 und ein inneres Gehäuse 52a unterteilt, wobei die Gehäuseteile 52, 52a über übliche Verbindungstechniken wie z.B. Schweißen oder Kleben miteinander verbunden und vorzugsweise aus Kunststoff gefertigt sind. Das Sensorgehäuse ist zudem am Motorgehäuse 62 befestigt, vorzugsweise an zwei Stellen. Die Sensorleiterplatte 22 ist im oberen Teil zur Steckerleiste flexibel, um die oben genannten Toleranzen zu beherrschen. Dazu eignet sich z.B. ein Flex-PCB (flexible Leiterplatte). Die elektrische Verbindung 22a von dieser flexiblen Leiterplatte 22 zur Hauptleiterplatte 23 der elektronischen Steuereinheit ECU erfolgt vorzugsweise über die besonders fehlersichere Steckerleiste 51 mit Einpresskontakten. Zur Montage mit der Hauptleiterplatte 23 besitzt das Gehäuse 18 der elektronischen Steuereinheit ECU eine Aussparung mit Deckel.

Das Sensorgehäuse 52, 52a ist mit einem Vorsprung des ECU-Gehäuses 18 verbunden und daran fixiert. Dazwischen liegt ein elastisches Teil 61, welches z.B. eine flexible elastische Dichtung oder ein Dichtungsbalg sein kann. Vorzugsweise ist das elastische Teil als Lippendichtung ausgebildet ist. Diese flexible und elastische Dichtung 61 dient somit zum 3-achsigen Toleranzausgleich. Die elektrische Verbindung von der Motorwicklung zur Leiterplatte 23 erfolgt über eine übliche Steckkontaktierung.

Diese in Figur 6 dargestellte Sensoranordnung ermöglicht zusätzlich noch die Messung der Rotorexzentrizität, welche auf die Spindel wirkt und Querkräfte an dem Kolben 8 erzeugt. Zur Messung der Rotorexzentrizität dient ein auf dem Rotor oder der Spindelmutter 56 angeordnetes Vermessungsmittel 53, das im einfachsten Fall ein Messflansch oder eine Scheibe ist. Die Rotorexzentrizität wirkt sich auch in axialer Richtung aus und kann mit Lasertechnik gemessen werden. Hierzu besitzt das äußere Sensorgehäuseteil 52a eine Öffnung 152 in seinem unteren Bereich 52", die nach der Messung mit einem Verschlussstopfen 54 geschlossen wird. Die Oberfläche des Vermessungsmittels 53 kann auf seiner dem äußeren Sensorgehäuseteil 52 zugewandten Seite für die Messung Markierungen aufweisen, mit einer Beschichtung versehen und/oder profiliert sein. Der untere Bereich 52" ist mittels einer Befestigungsschraube 55 an dem Motorgehäuse 62 befestigt.

Die Figur 7 zeigt eine platzsparende schematische Ausgestaltung eines Vorratsbehälters VB, der einen vorderen Bereich VB_{V}, einen mittleren Bereich VBM sowie einen hinteren Bereich VB_{H} aufweist. Der vordere Bereich VB_{V} weist eine obere Einfüllöffnung 100 auf, die mit dem Deckel 101 verschließbar ist. Wie in Figur 7a dargestellt, umgreift der Vorratsbehälter VB das Gehäuse B der elektronischen Steuereinheit ECU an drei Seiten, nämlich dessen Vorderseite ECU-V, dessen seitliche Wandung ECU-S sowie dessen Rück- bzw. Hinterseite ECU-H. Die Rückseite ECU-H ist der Spritzschutzwand SW zugewandt. Je nach Ausbildung der Einheit kann der Vorratsbehälter VB, wie in Figur 7a dargestellt, auch an der Rückwand des Gehäuses der Ventilanordnung HCU anliegen bzw. diese Hintergreifen.

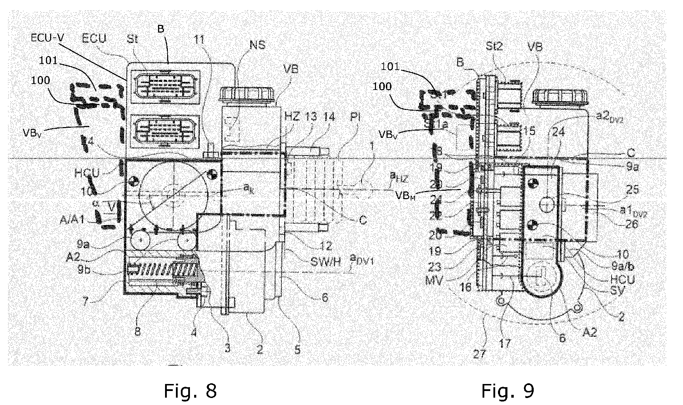

Die Figuren 8 und 9 zeigen eine Seitenansicht sowie die Vorderansicht auf eine erfindungsgemäße Einheit, die bis auf die Ausgestaltung des Vorratsbehälters VB, der Einheit, wie sie in den Figuren 1 und 2 dargestellt und beschrieben ist, entspricht. Wie der Figur 8 zu entnehmen ist, ist der vorderer Bereich VB_{V} der Vorderseite ECU-V des Gehäuses B der elektronischen Steuereinheit ECU vorgelagert, so dass die Einfüllöffnung besser zu erreichen ist. Da es i.d.R. aus platztechnischen Gründen nicht sinnvoll ist, den gesamten Vorratsbehälter VB vor oder neben der elektronischen Steuereinheit ECU anzuordnen, sieht die Erfindung vor, dass nur ein schmaler mittlerer Bereich VBM sich seitlich neben dem Gehäuse B zur Rückseite ECU-H der ECU hin erstreckt, wobei der mittlere Bereich VBM dort in seinen vom Volumen wesentlich größeren hinteren Bereich VBH mündet, welcher hinter dem Gehäuse B der elektronischen Steuereinheit ECU angeordnet ist. Selbstverständlich ist es auch möglich, dass der Vorratsbehälter VB auch das Gehäuse B der ECU übergreift. Sofern die Spritzwand SW in einem Winkel φ zur Senkrechten angeordnet ist, sollte der vordere Bereich VBV des Vorratsbehälters VB so ausgebildet sein, dass die Flächennormale der Einfüllöffnung 100 senkrecht ausgerichtet ist.

### Bezugszeichenliste

- HZ: Hauptbremszylinder (Single)
- a_{HZ}: Hauptachse des Hauptbremszylinders
- a_{DV1}: Achse der ersten Druckversorgungseinrichtung DV1
- a1_{DV2}: horizontale Ausrichtung der Achse der zweiten Druckversorgungseinrichtung DV2 senkrecht zur Achse a_{DV1} der ersten Druckversorgungseinrichtung DV1
- a2_{DV2}: vertikale Ausrichtung der Achse der zweiten Druckversorgungseinrichtung DV2 senkrecht zur Achse a_{DV1} der ersten Druckversorgungseinrichtung DV1
- DV: Druckversorgung
- HCU: Hydraulikcontrolunit
- ECU: elektronische Computing Unit
- ECU-V: Vorderseite der ECU
- ECU-S: Seitliche Wandung der ECU
- ECU-O: Oberseite der ECU
- ECU-H: Hinterseite der ECU, der Spritzwand des Fahrzeugs zugewandt
- PI: Pedalinterface
- SW/H: Spritzwand/Halterung
- St: Stecker
- BKV: Bremskraftverstärker
- NS: Niveausensor
- RZ: Radzylinder
- MV: Magnetventil
- Dr: Drossel
- SV: Saugventil von DV1
- A: Gehäuse für HCU und DV1 und optional DV2
- A1: Teilgehäuse für HCU und DV2
- A2: Teilgehäuse für DV1
- B: Gehäuse für ECU
- C: Gehäuse für HZ und Wegsimulator WS mit Flansch
- a_{DV1}: Motorachse von DV1
- a_{DV2}: Motorachse von DV2
- a_{HZ}: Längsachse vom Hauptbremszylinder HZ
- VB: Vorratsbehälter
- VB_{H}: Hinterer Bereich des Vorratsbehälters
- VB_{M}: Mittlerer Bereich des Vorratsbehälters
- VB_{V}: Vorderer Bereich des Vorratsbehälters
- 1: Pedalstößel
- 2: Motor
- 3: Zwischengehäuse
- 4: Befestigungsschraube
- 5: Sensorgehäuse
- 6: Drehwinkelsensor
- 7: Verschlussdeckel
- 8: Kolben
- 9a/9b: Anschlüsse zum VB
- 10: Anschlüsse zum RZ
- 11: Anschluss zum HZ
- 12: Flansch von HZ
- 13: Befestigungsschraube
- 14: Befestigungsschraube zu Stirnwand oder Halterung
- 15: elektrische Verbindung Motor von DV2 zu ECU
- 16: elektrische Verbindung von DV1 Motor
- 17: elektrische Verbindung von Drehwinkelsensor
- 18: ECU-Gehäuse
- 19: Steg mit Dichtung
- 20: Treiber für MV
- 21: Anschlusssteg MV
- 22: Kleines PCB
- 22a: elektrische Verbindung der Haupt-PCB zum PCB 22 der ECU
- 23: Haupt-PCB
- 24: HCU-Block
- 25: Bohrung für Exzenter-Kolbenpumpe DV2
- 26: Motor für DV2
- 27: Umriss Kontur 8" Vakuum-BKV
- 28: Anschlagring für Kolben
- 29: Leitung zum VB
- 30: KWS
- 31/31a: Pedalstange
- 32: Federgehäuse
- 33: HZ-Kolben
- 34: Sensorelement
- 35: Target
- 36: Antriebswelle
- 37: Zahnrad
- 38: Zahnstange
- 39: Führungsteil
- 40: Führungsleiste
- 41: Target
- 42: induktiver Sensor
- 43: HZ-Gehäuse
- 44: WS-Kolben
- 44a: WS-Feder
- 45: WS-Dichtung
- 46: Gleitring
- 47: Verbindungsbohrungen WS-HZ und HCU-Block 24
- 48: Gleitringe
- 49: Lagerteil
- 50: Rückstellfeder
- 51: Steckerleiste mit Einpresskontakten
- 52: Sensorgehäuse 1
- 52a: Sensorgehäuse 2
- 53: Messflansch
- 54: Verschlussstopfen
- 55: Befestigung Sensorgehäuse
- 56: Gewindemutter
- 57: Gewindespindel
- 58: KGT
- 59: Kolben
- 60: Motorkontaktierung zu ECU
- 61: Gehäusedichtung
- 62: Motorgehäuse
- 63: Motorlager
- 64: Rotor
- 100: Öffnung des Vorratsbehälters
- 101: Verschlussdeckel des Vorratsbehälters
- 152: verschließbare Öffnung

## Patentansprüche

1. Ein Gehäuse (A) für ein hydraulisch wirkendes Bremssystem, Folgendes umfassend:
- eine oder mehrere Druckräume einer ersten Druckversorgungseinrichtung (DV1), wobei das Gehäuse (A) angepasst ist, mit einem elektromotorischen Antrieb (2) der ersten Druckversorgungseinrichtung (DV1) verbunden zu werden;
- eine oder mehrere Pumpenelemente einer zweiten Druckversorgungseinrichtung (DV2), wobei das Gehäuse (A) angepasst, mit einem elektromotorischen Antrieb (26) der zweiten Druckversorgungseinrichtung (DV2) verbunden zu werden;
- ein oder mehrere Ventilanordnungen (HCU) mit einem oder mehreren Magnetventilen (MV), wobei die einen oder mehreren Ventilanordnungen (HCU) mit dem einem oder den mehreren Druckräumen und/oder mit den einen oder mehreren Pumpenelementen hydraulisch verbunden sind, wobei die einen oder mehreren Ventilanordnungen (HCU) mit zwei hydraulischen Bremskreisen (BK1, BK2) des Bremssystems hydraulisch verbunden sind;
wobei eine oder mehrere Magnetspulen eines jeden Magnetventils (MV) an einer ersten lateralen Seite des Gehäuses (A) angeordnet sind;
wobei das Gehäuse (A) angepasst ist, an der ersten lateralen Seite mit einem zweiten Gehäuse (B, 18) umfassend eine elektronische Steuer- und Regeleinheit (ECU) verbunden zu werden, wobei das zweite Gehäuse (B, 18) zwei voneinander unabhängige Bordnetz-Stecker (St1, St2) aufweist, einen für den elektromotorischen Antrieb (2) der ersten Druckversorgungseinrichtung (DV1), den anderen für den elektromotorischen Antrieb (26) der zweiten Druckversorgungseinrichtung (DV2), und wobei die elektronische Steuer- und Regeleinheit (ECU) mindestens einen elektrischen Anschluss an eine oder mehrere der Magnetspulen aufweist.

2. Das Gehäuse (A) nach Anspruch 1, wobei der elektromotorische Antrieb (2) der ersten Druckversorgungseinrichtung (DV1) und der elektromotorische Antrieb (26) der zweiten Druckversorgungseinrichtung (DV2) mit dem Gehäuse (A) verbunden sind.

3. Das Gehäuse (A) nach Anspruch 2, wobei die elektronische Steuer- und Regeleinheit (ECU) mit dem Gehäuse (A), dem elektromotorischen Antrieb (2) der ersten Druckversorgungseinrichtung (DV1) und dem elektromotorischen Antrieb (26) der zweiten Druckversorgungseinrichtung (DV2) verbunden ist.

4. Das Gehäuse (A) nach einem der vorhergehenden Ansprüche, wobei eine Motorachse (a_{DV1}) des elektromotorischen Antriebs (2) der ersten Druckversorgungseinrichtung (DV1) in einer im Wesentlichen seitlichen Richtung ist.

5. Das Gehäuse (A) nach einem der vorhergehenden Ansprüche, wobei eine Motorachse (a_{DV2}) des elektromotorischen Antriebs (26) der zweiten Druckversorgungseinrichtung (DV2) in einer im Wesentlichen seitlichen Richtung ist.

6. Das Gehäuse (A) nach einem der vorhergehenden Ansprüche, wobei die Motorachse (a_{DV1}) des elektromotorischen Antriebs (2) der ersten Druckversorgungseinrichtung (DV1) im Wesentlichen senkrecht oder im Wesentlichen parallel zu der Motorachse (a_{DV2}) des elektromotorischen Antriebs (26) der zweiten Druckversorgungseinrichtung (DV2) ist.

7. Das Gehäuse (A) nach einem der Ansprüche 1 bis 5, wobei die Motorachse (a_{DV1}) des elektromotorischen Antriebs (2) der ersten Druckversorgungseinrichtung (DV1) sich von der Motorachse (a_{DV2}) des elektromotorischen Antriebs (26) der zweiten Druckversorgungseinrichtung (DV2) unterscheidet.

8. Das Gehäuse (A) nach einem der vorhergehenden Ansprüche, wobei das Gehäuse (A) angepasst ist, mit einem Vorratsbehälter (VB), der sich im Wesentlichen oder zumindest teilweise über ein oberes Ende des Gehäuses (A) erstreckt, verbunden zu werden, optional wobei der Vorratsbehälter (VB) auch das zweite Gehäuse (B, 18) übergreift.

9. Das Gehäuse (A) nach einem der vorhergehenden Ansprüche, wobei das Gehäuse (A) angepasst ist, mit einem dritten Gehäuse (C) verbunden zu werden, wobei das dritte Gehäuse (C) einen Hauptbremszylinder (HZ) mit mindestens einem Kolben, der von einer Betätigungsvorrichtung, insbesondere in Form eines Bremspedals, kraftbeaufschlagbar ist, einen Wegsimulator eines elektronischen Bremspedals oder einen Bremsschalter für vollautonomes Fahren umfasst.

10. Das Gehäuse (A) nach Anspruch 9, wobei das dritte Gehäuse (C) mit dem Gehäuse (A) verbunden ist.

11. Das Gehäuse (A) nach einem der vorhergehenden Ansprüche, wobei die erste Druckversorgungseinrichtung (DV1) eine Kolben-Zylinder-Einheit oder eine Doppelhubkolbenpumpe ist, die von dem elektromotorischen Antrieb (2) der ersten Druckversorgungseinrichtung (DV1) angetrieben wird, wobei der Antrieb direkt oder über ein Übersetzungsgetriebe, insbesondere ein Kugelumlaufgetriebe, den Kolben der Kolben- bzw. Doppelhubkolbenpumpe verstellt.

12. Das Gehäuse (A) nach einem der vorhergehenden Ansprüche, wobei die zweite Druckversorgungseinrichtung (DV2) für kontinuierliche Förderung ausgelegt ist.

13. Das Gehäuse (A) nach einem der vorhergehenden Ansprüche, wobei die einen oder mehreren elektrischen Anschlüsse der elektronischen Steuer- und Regeleinheit (ECU) an die einen oder mehreren Magnetspulen Einpresskontakte sind.

14. Das Gehäuse (A) nach einem der vorhergehenden Ansprüche, wobei der elektromotorische Antrieb (2) der ersten Druckversorgungseinrichtung (DV1) von einer anderen Seite als die erste laterale Seite montierbar ist.

15. Das Gehäuse (A) nach einem der vorhergehenden Ansprüche, wobei der elektromotorische Antrieb (26) der zweiten Druckversorgungseinrichtung (DV2) von einer anderen Seite als die erste laterale Seite montierbar ist.

## Claims

1. Housing (A) for a hydraulically acting brake system, comprising the following:
- one or more pressure chambers of a first pressure supply device (DV1), wherein the housing (A) is adapted to be connected to an electromotive drive (2) of the first pressure supply device (DV1);
- one or more pump elements of a second pressure supply device (DV2), wherein the housing (A) is adapted to be connected to an electromotive drive (26) of the second pressure supply device (DV2);
- one or more valve arrangements (HCU) with one or more solenoid valves (MV), wherein the one or more valve arrangements (HCU) are hydraulically connected to the one or more pressure chambers and/or to the one or more pump elements, wherein the one or more valve arrangements (HCU) are hydraulically connected to two hydraulic brake circuits (BK1, BK2) of the brake system;
wherein one or more solenoid coils of each solenoid valve (MV) are arranged on a first lateral side of the housing (A);
wherein the housing (A) is adapted to be connected on the first lateral side to a second housing (B, 18), comprising an electronic open-loop and closed-loop control unit (ECU), wherein the second housing (B, 18) has two mutually independent on-board electrical system plug connectors (St1, St2), one for the electromotive drive (2) of the first pressure supply device (DV1), the other for the electromotive drive (26) of the second pressure supply device (DV2), and wherein the electronic open-loop and closed-loop control unit (ECU) has at least one electrical connection to one or more of the solenoid coils.

2. Housing (A) according to Claim 1, wherein the electromotive drive (2) of the first pressure supply device (DV1) and the electromotive drive (26) of the second pressure supply device (DV2) are connected to the housing (A).

3. Housing (A) according to Claim 2, wherein the electronic open-loop and closed-loop control unit (ECU) is connected to the housing (A), to the electromotive drive (2) of the first pressure supply device (DV1) and to the electromotive drive (26) of the second pressure supply device (DV2).

4. Housing (A) according to one of the preceding claims, wherein a motor axis (a_{DV1}) of the electromotive drive (2) of the first pressure supply device (DV1) is in a substantially lateral direction.

5. Housing (A) according to one of the preceding claims, wherein a motor axis (a_{DV2}) of the electromotive drive (26) of the second pressure supply device (DV2) is in a substantially lateral direction.

6. Housing (A) according to one of the preceding claims, wherein the motor axis (a_{DV1}) of the electromotive drive (2) of the first pressure supply device (DV1) is substantially perpendicular or substantially parallel to the motor axis (a_{DV2}) of the electromotive drive (26) of the second pressure supply device (DV2).

7. Housing (A) according to one of Claims 1 to 5, wherein the motor axis (a_{DV1}) of the electromotive drive (2) of the first pressure supply device (DV1) differs from the motor axis (a_{DV2}) of the electromotive drive (26) of the second pressure supply device (DV2).

8. Housing (A) according to one of the preceding claims, wherein the housing (A) is adapted to be connected to a reservoir (VB) which extends substantially or at least partially over an upper end of the housing (A), optionally wherein the reservoir (VB) also overlaps the second housing (B, 18).

9. Housing (A) according to one of the preceding claims, wherein the housing (A) is adapted to be connected to a third housing (C), wherein the third housing (C) comprises a master brake cylinder (HZ) with at least one piston which can be acted on with force by an actuating device, in particular in the form of a brake pedal, a travel simulator of an electronic brake pedal or a brake switch for fully autonomous driving.

10. Housing (A) according to Claim 9, wherein the third housing (C) is connected to the housing (A).

11. Housing (A) according to one of the preceding claims, wherein the first pressure supply device (DV1) is a piston-cylinder unit or a double-action piston pump driven by the electromotive drive (2) of the first pressure supply device (DV1), wherein the drive adjusts the piston of the piston pump or double-action piston pump directly or via a transmission gear, in particular a recirculating ball gear.

12. Housing (A) according to one of the preceding claims, wherein the second pressure supply device (DV2) is designed for continuous delivery action.

13. Housing (A) according to one of the preceding claims, wherein the one or more electrical connections of the electronic open-loop and closed-loop control unit (ECU) to the one or more solenoid coils are press-fit contacts.

14. Housing (A) according to one of the preceding claims, wherein the electromotive drive (2) of the first pressure supply device (DV1) can be mounted from a different side than the first lateral side.

15. Housing (A) according to one of the preceding claims, wherein the electromotive drive (26) of the second pressure supply device (DV2) can be mounted from a different side than the first lateral side.

## Revendications

1. Boîtier (A) pour un système de freinage à action hydraulique, comprenant les éléments suivants :
- une ou plusieurs chambres de pression d'un premier dispositif d'alimentation en pression (DV1), le boîtier (A) étant adapté pour être relié à un entraînement à moteur électrique (2) du premier dispositif d'alimentation en pression (DV1) ;
- un ou plusieurs éléments de pompe d'un deuxième dispositif d'alimentation en pression (DV2), le boîtier (A) étant adapté pour être relié à un entraînement à moteur électrique (26) du deuxième dispositif d'alimentation en pression (DV2) ;
- un ou plusieurs ensembles de vannes (HCU) avec une ou plusieurs électrovannes (MV), les un ou plusieurs ensembles de vannes (HCU) étant reliés hydrauliquement à l'une ou aux plusieurs chambres de pression et/ou à l'un ou aux plusieurs éléments de pompe, les un ou plusieurs ensembles de vannes (HCU) étant reliés hydrauliquement à deux circuits de freinage hydrauliques (BK1, BK2) du système de freinage ;
une ou plusieurs bobines magnétiques de chaque électrovanne (MV) étant disposées sur un premier côté latéral du boîtier (A) ;
le boîtier (A) étant adapté pour être relié, sur le premier côté latéral, à un deuxième boîtier (B, 18) comprenant une unité de commande et de régulation électronique (ECU), le deuxième boîtier (B, 18) comportant deux connecteurs (St1, St2) du réseau de bord indépendants l'un de l'autre, l'un pour l'entraînement à moteur électrique (2) du premier dispositif d'alimentation en pression (DV1), l'autre pour l'entraînement à moteur électrique (26) du deuxième dispositif d'alimentation en pression (DV2), et l'unité de commande et de régulation électronique (ECU) comportant au moins un raccord électrique à une ou plusieurs des bobines magnétiques.

2. Boîtier (A) selon la revendication 1, l'entraînement à moteur électrique (2) du premier dispositif d'alimentation en pression (DV1) et l'entraînement à moteur électrique (26) du deuxième dispositif d'alimentation en pression (DV2) étant reliés au boîtier (A).

3. Boîtier (A) selon la revendication 2, l'unité de commande et de régulation électronique (ECU) étant reliée au boîtier (A), à l'entraînement à moteur électrique (2) du premier dispositif d'alimentation en pression (DV1) et à l'entraînement à moteur électrique (26) du deuxième dispositif d'alimentation en pression (DV2).

4. Boîtier (A) selon l'une des revendications précédentes, un axe de moteur (a_{DV1}) de l'entraînement à moteur électrique (2) du premier dispositif d'alimentation en pression (DV1) se trouvant dans une direction sensiblement latérale.

5. Boîtier (A) selon l'une des revendications précédentes, un axe de moteur (a_{DV2}) de l'entraînement à moteur électrique (26) du deuxième dispositif d'alimentation en pression (DV2) se trouvant dans une direction sensiblement latérale.

6. Boîtier (A) selon l'une des revendications précédentes, l'axe de moteur (a_{DV1}) de l'entraînement à moteur électrique (2) du premier dispositif d'alimentation en pression (DV1) étant sensiblement perpendiculaire ou sensiblement parallèle à l'axe de moteur (a_{DV2}) de l'entraînement à moteur électrique (26) du deuxième dispositif d'alimentation en pression (DV2).

7. Boîtier (A) selon l'une des revendications 1 à 5, l'axe de moteur (a_{DV1}) de l'entraînement à moteur électrique (2) du premier dispositif d'alimentation en pression (DV1) étant différent de l'axe de moteur (a_{DV2}) de l'entraînement à moteur électrique (26) du deuxième dispositif d'alimentation en pression (DV2).

8. Boîtier (A) selon l'une des revendications précédentes, le boîtier (A) étant adapté pour être relié à un réservoir (VB), qui s'étend sensiblement ou au moins en partie sur une extrémité supérieure du boîtier (A), en option le réservoir (VB) recouvrant également le deuxième boîtier (B, 18).

9. Boîtier (A) selon l'une des revendications précédentes, le boîtier (A) étant adapté pour être relié à un troisième boîtier (C), le troisième boîtier (C) comprenant un maître-cylindre de frein (HZ) avec au moins un piston, qui peut être soumis à l'action d'une force par un système d'actionnement, en particulier sous la forme d'une pédale de frein, un simulateur de course d'une pédale de frein électronique ou un commutateur de frein pour une conduite totalement autonome.

10. Boîtier (A) selon la revendication 9, le troisième boîtier (C) étant relié au boîtier (A).

11. Boîtier (A) selon l'une des revendications précédentes, le premier dispositif d'alimentation en pression (DV1) étant une unité piston-cylindre ou une pompe à double piston alternatif, qui est entraînée par l'entraînement à moteur électrique (2) du premier dispositif d'alimentation en pression (DV1), l'entraînement ajustant directement ou par un multiplicateur, en particulier une transmission à recirculation de billes, le piston de la pompe à piston ou de la pompe à double piston alternatif.

12. Boîtier (A) selon l'une des revendications précédentes, le deuxième dispositif d'alimentation en pression (DV2) étant conçu pour une promotion continue.

13. Boîtier (A) selon l'une des revendications précédentes, les un ou plusieurs raccords électriques de l'unité de commande et de régulation électronique (ECU) aux une ou plusieurs bobines magnétiques étant des contacts à enfoncer.

14. Boîtier (A) selon l'une des revendications précédentes, l'entraînement à moteur électrique (2) du premier dispositif d'alimentation en pression (DV1) pouvant être monté par un autre côté que le premier côté latéral.

15. Boîtier (A) selon l'une des revendications précédentes, l'entraînement à moteur électrique (26) du deuxième dispositif d'alimentation en pression (DV2) pouvant être monté par un autre côté que le premier côté latéral.
